Europäisches Patentamt

European Patent Office

Office européen des brevets

(11) Publication number: **0 333 674**
**A2**

## (12) EUROPEAN PATENT APPLICATION

(21) Application number: **89830118.9**

(51) Int. Cl.⁴: **C 08 B 30/16**
// A47J27/00

(22) Date of filing: **15.03.89**

(30) Priority: **16.03.88 IT 1980488**

(43) Date of publication of application:
**20.09.89 Bulletin 89/38**

(84) Designated Contracting States: **BE DE FR NL**

(71) Applicant: **COMER S.p.A.**
**Zona Industriale**
**S. Vito Di Leguzzano (Vicenza) (IT)**

(72) Inventor: **Codoni, Augusto**
**Località Rampignano**
**Pomarolo (Trento) (IT)**

(74) Representative: **Mercurio, Franco et al**
**c/o Società Italiana Brevetti S.p.A. Via Carducci, 8**
**I-20123 Milano (IT)**

(54) **Steam jet cooker for starches.**

(57) This invention relates to a steam jet cooker for starch feedstock, adapted to transform instantaneously a raw starch aqueous slurry feedstock in a starch paste. The latter is used in the paper industry in general as a glaze bonding material, or for sizing in the textile industry, in the confectionery industry, and so on. The subject cooker comprises substantially a cooking chamber provided with a pressurized steam entrance, a pressurized raw starch aqueous slurry feedstock entrance and a cooked starch paste exhaust. The inlet steam jet and starch feedstock jet on the opposite chamber walls are offset relative to each other.

EP 0 333 674 A2

## Description

## STEAM JET COOKER FOR STARCHES

This invention relates mainly to a starch feedstock jet cooker adapted to transform a raw starch aqueous slurry feedstock into a cooked starch paste.

It is already known to obtain said starch paste by loading into a cooker, through two entrances provided on a cooker wall, the raw starch feedstock and the steam respectively, and unloading the starch paste through an exhaust port, provided on the opposite wall of said to cooker.

There are also known cookers wherein the two entrances, for the raw starch feedstock and for the steam, are provided on opposite walls of the cooker and are perfectly coaxial to each other, while the starch paste exhaust port is provided on one of the walls, in a lower position relative to the entrances of the raw starch feedstock and of the steam.

Both approaches mentioned above make it difficult to generate a high enough turbulence within the cooker processing chamber and a corresponding intimate mixing between steam and starch slurry feedstock. the negative outcome is a non-homogeneous cooking of the raw starch feedstock, whereby the resulting starch paste lacks the properties required for a proper utilization.

There is a further drawback in the known cookers, in that they do not allow for changes in the starch paste exhaust velocity, as well as in the turbulence and starch residence time within the cooker. Therefore, the known cookers are disadvantageously limited to cooking starch feedstocks from a single source, and only by a continuous operation.

It is an object of this invention to do away with the above drawbacks, by providing a cooker with the following advantageous features: it allows such a turbulence to be reached within the cooking chamber as to generate an intimate mixing of steam and starch slurry feedstock, whereby the cooking process is homogeneous, this being the necessary condition to get a starch paste adapted to give the best results in use; it allows the starch paste exhaust velocity to be modified, whereby turbulence and starch residence time within the cooker can be changed and starches from different sources such as wheat, corn and potatoes and so on, can be processed; it may be used both in continuous cooking plants and in continuous thermal conversion plants with chemicals injection together with the starch feedstock; it delays calcareous scale formation whereby the time intervals between cooking chamber cleaning operations are extended.

A further object of this invention is to provide a low cost cooker construction which does not require frequent maintenance runs.

All the objects mentioned above are reached in the subject cooker, characterized in that:
- the steam injection jets provided on one of the cooking chamber walls and the raw starch feedstock injection jets provided on the opposite wall of said chamber are offset relative to each other;
- a movable valve plug is provided to control the starch paste exhaust port area;
- the cooking chamber has polished internal surfaces.

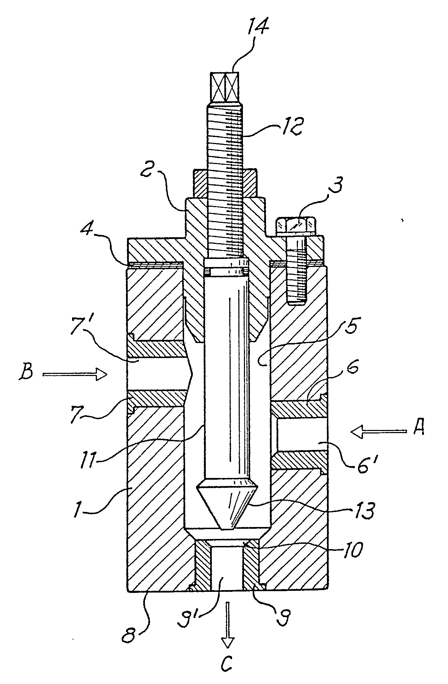

The features and advantages of this invention will become apparent from the following detailed description of a preferred but non exclusive embodiment of the subject cooker, shown herein for exemplary and non limiting purposes only in the attached drawing wherein a vertical cross-section of the subject cooker is outlined.

Referring now to the drawing, the subject cooker includes a body 1, manufactured from a single block, preferably stainless steel, and a closure flange 2 fastened to body 1 by means of bolts 3, with an intervening gasket shown at 4. Within body 1 there is managed a cooking chamber 5, and through a wall of the latter the steam flows inside according to arrow A, through a hollow bushing, while the raw starch feedstock enters at the opposite wall, in the form of an aqueous slurry, according to arrow B, through hollow bushing 7. As it is shown in the Figure, bushings 6 and 7, and therefore the steam jet and raw starch aqueous slurry feedstock jet are offset relative to each other, according to the feature of this invention. On bottom wall 8 of body 1 there is provided a bushing 9 having a cone-shaped opening 10, as an exhaust port in the direction of arrow C, for the cooked starch paste which has formed within cooking chamber 5 after mixing between the steam at a pressure ranging from 3 to 10 Kg/cm$^2$ and the cooked starch at a pressure ranging as well from 3 to 10 Kg/cm$^2$. Within cooking chamber 5 there is provided a rod 11 having a threaded stem 12 at the top end thereof, said rod carrying a cone-shaped valve plug 13 at the lower end thereof. Said threaded stem 12 ends at the top with a square shank 14 which, if suitably operated by a wrench, in either direction, makes rod 11 to move up or down, whereby valve plug 13, moving more or less apart from cone shaped port 10, may be used to control the opening area of the starch paste exhaust.

Hollow bushings 6, 7 and 9 may be replaced with other bushings having an identical outer diameter, but having different diameter inner bores, 6', 7' and 9', depending upon the different productions desired.

The cooker operates continuously, with continuously open exhaust port 10, with possible injection of chemicals together with the starch slurry feedstock.

The offset provided between steam inlet and raw starch feedstock inlet generates a higher turbulence, and correspondingly improves the uniformity of cooking; the cooker chamber inner surfaces are mirror polished in order to delay scale formation and to extend the time interval between chamber cleaning operations.

Practical or embodimental modifications of the construction details may be made to this invention, without exceeding the scope of the inventive concept, as it is defined in the attached Claims.

## Claims

1. A steam jet cooker for starches, comprising a cooking chamber provided with a pressurized steam inlet, a pressurized raw starch aqueous slurry feedstock inlet, and an exhaust port for the cooked starch paste, characterized in that jets (A and B) of the steam inlet provided on a wall of cooking chamber (5) and of the starch feedstock provided on the opposite wall of cooking chamber (5) respectively, are offset relative to each other.

2. The cooker of Claim 1, characterized in that exhaust port (10) for the starch paste is provided on bottom wall (8) of said chamber (5).

3. The cooker of Claim 2, characterized in that a vertically displaceable valve plug (13) is used to control the flow area of said port (10) on bottom wall (8) of said chamber (5).

4. The cooker of Claim 1, characterized in that it is made out of stainless steel block material and said cooking chamber (5) has mirror polished surfaces.

5. The cooker of Claim 1, characterized in that it operates continuously with exhaust port (10) continuously open, and possible injection of chemicals together with the raw starch feedstock.

6. The cooker of Claim 1, characterized in that the steam inlet, the raw starch feedstock inlet and the starch paste exhaust port comprise replaceable bushings (6, 7 and 9) respectively, provided with bores (6', 7' and 9') of various diameters.